# FASCICULE DE BREVET EUROPEEN

(11) **EP 4 303 468 B1**
(45) Date de publication et mention de la délivrance du brevet: **17.07.2024**
(21) Numéro de dépôt: 23182190.1
(22) Date de dépôt: 28.06.2023
(51) Int. Cl.: F16H 55/14, F02C 7/36, F16H 57/08, F16H 57/00

(54) **SOLAIRE POUR UN REDUCTEUR MECANIQUE DE TURBOMACHINE D'AERONEF**
SONNENRAD FÜR EIN REDUKTIONSGETRIEBE EINES TURBOTRIEBWERKS EINES LUFTFAHRZEUGS
SUN GEAR FOR A REDUCTION GEARBOX OF AN AIRCRAFT TURBINE ENGINE

(30) Priorité: 04.07.2022 FR 2206789
(43) Date de publication de la demande: 10.01.2024
(73) Titulaire: Safran Transmission Systems, 92700 Colombes (FR)
(72) Inventeur: MOULY,, Guillaume Pierre, 77550 Moissy-Cramayel (FR); GEDIN,, Patrice Jocelyn Francis, 77550 Moissy-Cramayel (FR); SEREY,, Jean-Pierre, 77550 Moissy-Cramayel (FR)
(74) Mandataire: Gevers & Orès

(56) Documents cités:
- WO-A1-2010/092263
- US-A1- 2005 132 834

## Description

### Domaine technique de l'invention

La présente invention concerne le domaine des réducteurs mécaniques pour des turbomachines en particulier d'aéronef.

### Arrière-plan technique

L'état de l'art comprend notamment les documents WO-A1-2010/092263, FR-A1-2 987 416, FR-A1-3 008 462, FR-A1-3 041 054 et US-A1-2005/132834.

Le rôle d'un réducteur mécanique est de modifier le rapport de vitesse et de couple entre l'axe d'entrée et l'axe de sortie d'un système mécanique.

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution différent et sont équirépartis sur le même diamètre de fonctionnement autour de l'axe des planétaires. Ces axes sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».
- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites. Les réducteurs peuvent être composés d'un ou plusieurs étages d'engrènement. Cet engrènement est assuré de différentes façons comme par contact, par friction ou encore par champs magnétique.

Il existe plusieurs types d'engrènement par contact comme avec des dentures droites, hélicoïdales ou en chevron.

Une des problématiques d'un réducteur de ce type concerne la reprise des efforts extérieurs et des défauts de fabrication qu'il faut compenser par de la souplesse sur les interfaces.

Dans la présente demande, on entend par « souplesse », une aptitude d'une pièce ou d'une partie de pièce à se déformer élastiquement pour pouvoir absorber des efforts, en particulier lors de la transmission d'un couple de rotation.

On entend par « interface », une liaison entre deux pièces, cette liaison pouvant être par exemple un engrènement (via une ou des dentures par exemple) ou un accouplement (via des cannelures).

Dans la technique actuelle, il est connu de prévoir une souplesse au niveau de l'arbre d'entrée du réducteur ou à l'interface entre l'arbre d'entrée et le solaire.

L'arbre d'entrée comprend une extrémité tubulaire qui est engagée dans le solaire et qui comprend des cannelures d'accouplement avec des cannelures complémentaires du solaire. Cet arbre peut comprendre une souplesse qui se présente en général sous la forme d'un soufflet conférant à l'arbre une aptitude de déformation élastique en flexion ou en torsion.

En variante, une pièce intermédiaire de liaison entre l'arbre d'entrée et le solaire peut comprendre une souplesse.

Ces technologies ne sont toutefois pas entièrement satisfaisantes car elles se traduisent en général par un déséquilibre dans la transmission des efforts au solaire et donc par un chargement inhomogène de la denture du solaire. Une répartition homogène des charges sur les dents du solaire est au contraire souhaitée pour limiter les contraintes auxquelles est soumis le solaire en fonctionnement.

L'invention propose une solution à ce problème, qui est simple, efficace et économique.

### Résumé de l'invention

L'invention concerne un réducteur mécanique pour une turbomachine d'aéronef, ce réducteur comprenant:
- un porte-satellites qui comprend un premier axe de rotation,
- un solaire qui est monté dans le porte-satellites et qui est centré sur le premier axe,
- une couronne qui s'étend autour du solaire et du premier axe, et
- des satellites qui sont portés par le porte-satellites et qui sont engrenés avec le solaire et la couronne, les satellites comportant des seconds axes de rotation parallèles au premier axe, le solaire comportant un corps annulaire s'étendant autour d'un axe et présentant un alésage central traversant centré sur l'axe, l'alésage étant pourvu de cannelures d'accouplement, et le corps annulaire comprenant à sa périphérie externe au moins une denture d'engrènement, caractérisé en ce que le corps comprend deux anneaux coaxiaux, respectivement un anneau externe et un anneau interne, l'anneau externe comportant une surface interne qui entoure une surface externe de l'anneau interne et qui est située à distance radiale de cette surface externe, le corps comportant en outre un voile annulaire de liaison entre la surface interne de l'anneau externe et la surface externe de l'anneau interne et le voile annulaire étant formé d'une seule pièce avec l'anneaux interne et l'anneau externe, ce voile annulaire comportant un bord périphérique interne relié à la surface externe de l'anneau interne et un bord périphérique externe relié à la surface interne de l'anneau externe, ces bords interne et externe étant situés dans un même plan perpendiculaire audit axe et passant axialement par les milieux desdits anneaux interne et externe, le voile annulaire comprenant en outre au moins une paroi de liaison entre ses bords interne et externe qui s'étend en dehors du plan, le voile annulaire ayant de préférence une forme générale de soufflet ou une forme générale ondulée en direction radiale.

L'invention propose ainsi de prévoir une souplesse directement dans le solaire. Cette souplesse est conférée par le voile de liaison des anneaux du solaire. Avantageusement, le voile confère une souplesse en directions radiale et axiale au solaire, c'est-à-dire que les anneaux sont aptes à se déplacer radialement l'un par rapport à l'autre et donc à se désaxer. Ce déplacement est rendu possible par une déformation élastique du voile qui absorbe ainsi des efforts lors de la transmission d'un couple de rotation. Les bords du voile sont situés dans un plan médian du solaire, ce qui permet d'assurer la reprise de ces efforts au milieu du solaire. Ceci a pour avantage de mieux équilibrer les charges au niveau des dents du solaire et donc de minimiser les contraintes sur la denture du solaire.

La solution proposée ci-dessous est compatible :
- d'un réducteur simple ou à plusieurs étages,
- d'un réducteur planétaire, épicycloïdal ou différentiel,
- de dentures droites, hélicoïdales ou en chevron.

Le solaire selon l'invention peut comprendre les caractéristiques suivantes, prises en combinaison les unes avec les autres, comme définies dans les revendications dépendantes.
- ladite au moins un paroi de liaison est cylindrique et/ou tronconique ;
- le voile annulaire comprend entre deux et cinq parois de liaison ;
- les parois de liaison sont agencées en étant mises bout à bout et s'étendent, de préférence au moins en partie, les unes autour des autres ;
- le voile annulaire a en section axiale une forme générale en S, U, C, V, M, W ou Ω, ou comprend une ou plusieurs parties ayant en section axiale une forme générale en S, U, C, V, M, W ou Ω ;
- l'anneau interne a une longueur axiale inférieure ou égale à celle de l'anneau externe ;
- le voile annulaire a une longueur axiale inférieure ou égale à celle de l'anneau interne ou de l'anneau externe ;
- l'anneau interne a une épaisseur radiale maximale inférieure ou égale à celle de l'anneau externe ;
- la distance radiale entre les anneaux interne et externe, ou la dimension radiale du voile annulaire, est supérieure ou égale à trois fois l'épaisseur radiale de l'anneau interne ou externe ;
- le voile annulaire a une épaisseur inférieure ou égale à celle de l'anneau interne ou de l'anneau externe ;
- le solaire est réalisé en une seule pièce ;

Le voile peut être entièrement logé entre les anneaux. entièrement logé entre les anneaux.

L'invention concerne en outre une turbomachine d'aéronef, comportant un réducteur mécanique tel que décrit ci-dessus

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue schématique en coupe axiale d'une turbomachine utilisant l'invention,
[Fig.2] la figure 2 est une vue partielle en coupe axiale d'un réducteur mécanique,
[Fig.3] la figure 3 est une vue très schématique partielle en coupe axiale d'un solaire selon l'invention pour un réducteur mécanique d'aéronef,
[Fig.4] la figure 4 est une vue schématique en perspective d'un solaire selon un mode de réalisation de l'invention,
[Fig.5] la figure 5 est une vue schématique en coupe axiale d'un réducteur mécanique d'aéronef comportant le solaire de la figure 4 ; et
[Fig.6a-6f] les figures 6a à 6f sont des vues très schématiques de variantes de réalisation d'un voile pour un solaire selon l'invention.

### Description détaillée de l'invention

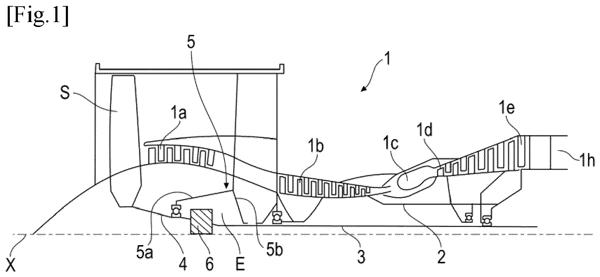

La figure 1 décrit une turbomachine 1 qui comporte, de manière classique, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entrainé par l'arbre BP 3 au moyen d'un réducteur 6. Ce réducteur 6 est généralement de type planétaire ou épicycloïdal.

La description qui suit concerne un réducteur du type épicycloïdal, dont le porte-satellites et le solaire sont mobiles en rotation, la couronne du réducteur étant fixe dans le repère du moteur.

Le réducteur 6 est positionné dans la partie amont de la turbomachine. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des joints au niveau d'un palier permettant la traversée de l'arbre de soufflante 4, et en aval par des joints au niveau de la traversée de l'arbre BP 3.

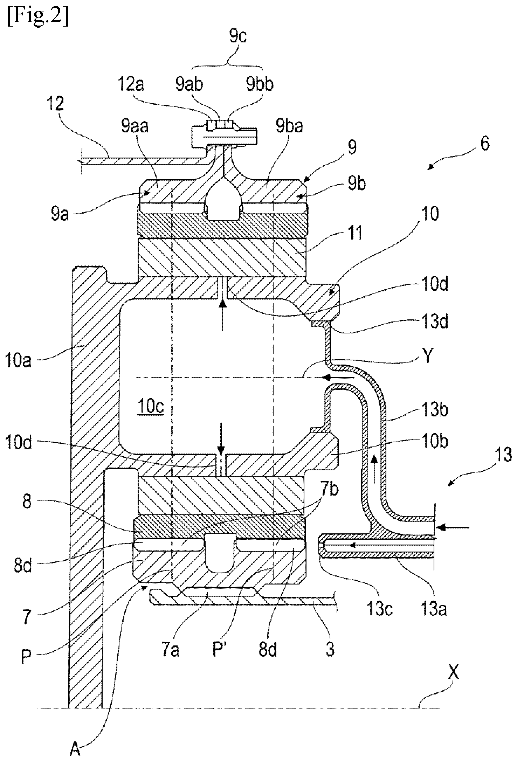

La figure 2 montre un réducteur épicycloïdal 6. En entrée, le réducteur 6 est relié à l'arbre BP 3, par exemple par l'intermédiaire de cannelures internes 7a. Ainsi, l'arbre BP 3 entraîne un pignon planétaire appelé le solaire 7. Classiquement, le solaire 7, dont l'axe de rotation est confondu avec celui de la turbomachine X, entraîne une série de pignons appelés satellites 8, qui sont équirépartis sur le même diamètre autour de l'axe de rotation X. Ce diamètre est égal au double de l'entraxe de fonctionnement entre le solaire 7 et les satellites 8. Le nombre de satellites 8 est généralement défini entre trois et sept pour ce type d'application.

En variante, les satellites 8 pourraient ne pas être équirépartis autour de l'axe X.

L'ensemble des satellites 8 est maintenu par un châssis appelé porte-satellites 10. Chaque satellite 8 tourne autour de son propre axe Y, et engrène avec la couronne 9.

En sortie nous avons :
▪ Dans cette configuration épicycloïdale, l'ensemble des satellites 8 entraine en rotation le porte-satellite 10 autour de l'axe X de la turbomachine. La couronne est fixée au carter moteur ou stator 5 via un porte-couronne 12 et le porte-satellites 10 est fixé à l'arbre de soufflante 4.
▪ Dans une autre configuration planétaire, l'ensemble des satellites 8 est maintenu par un porte-satellites 10 qui est fixé au carter moteur ou stator 5. Chaque satellite 8 entraine la couronne qui est rapportée à l'arbre de soufflante 4 via un porte-couronne 12.
▪ Dans une autre configuration différentielle, l'ensemble des satellites 8 est maintenu par un porte-satellites 10 qui est relié à un premier arbre de soufflante 5. Chaque satellite 8 entraine la couronne qui est rapportée à un second arbre de soufflante contrarotatif 4 via un porte-couronne 12.

Chaque satellite 8 est monté libre en rotation à l'aide d'un palier 11, par exemple de type roulement ou palier hydrodynamique. Chaque palier 11 est monté sur un des axes 10b du porte-satellites 10 et tous les axes sont positionnés les uns par rapport aux autres à l'aide d'un ou plusieurs châssis structurels 10a du porte-satellites 10. Il existe un nombre d'axes 10b et de paliers 11 égal au nombre de satellites. Pour des raisons de fonctionnement, de montage, de fabrication, de contrôle, de réparation ou de rechange, les axes 10b et le châssis 10a peuvent être séparés en plusieurs pièces.

Pour les mêmes raisons citées précédemment, la denture d'un satellite peut être séparée en plusieurs hélices ou dents présentant chacun un plan médian P, P'. Dans notre exemple, nous détaillons le fonctionnement d'un réducteur dont chaque satellite comprend deux séries de dents en chevron coopérant avec une couronne séparée en deux demi-couronnes :
▪ Une demi-couronne amont 9a constituée d'une jante 9aa et d'une demi-bride de fixation 9ab. Sur la jante 9aa se trouve l'hélice avant engrenée avec une hélice de la denture 8d de chaque satellite 8. L'hélice de la denture 8d engrène également avec celle du solaire 7.
▪ Une demi-couronne aval 9b constituée d'une jante 9ba et d'une demi-bride de fixation 9bb. Sur la jante 9ba se trouve l'hélice arrière engrenée avec une hélice de la denture 8d de chaque satellite 8. L'hélice de la denture 8d engrène également avec celle du solaire 7.

Si les largeurs d'hélice varient entre le solaire 7, les satellites 8 et la couronne 9 à cause des recouvrements de denture, elles sont toutes centrées sur un plan médian P pour les dents amont et sur un autre plan médian P' pour les dents aval.

La figure 2 illustre ainsi le cas d'un réducteur 6 à simple étage d'engrènement, c'est-à-dire qu'une même denture 8d de chaque satellite 8 coopère à la fois avec le solaire 7 et la couronne 9. Même si la denture 8d comprend deux séries de dents, ces dents ont le même diamètre moyen et forment une seule et même denture appelée chevron.

La demi-bride de fixation 9ab de la couronne amont 9a et la demi-bride de fixation 9bb de la couronne aval 9b forment la bride de fixation 9c de la couronne. La couronne 9 est fixée à un porte-couronne en assemblant la bride de fixation 9c de la couronne et la bride de fixation 12a du porte-couronne à l'aide d'un montage boulonné par exemple.

Les flèches de la figure 2 décrivent l'acheminement de l'huile dans le réducteur 6. L'huile arrive dans le réducteur 6 depuis la partie stator 5 dans un distributeur 13 par différents moyens qui ne seront pas précisés dans cette vue car ils sont spécifiques à un ou plusieurs types d'architecture. Le distributeur 13 comprend des injecteurs 13a et des bras 13b.

Les injecteurs 13a ont pour fonction de lubrifier les dentures et les bras 13b ont pour fonction de lubrifier les paliers. L'huile est amenée vers l'injecteur 13a pour ressortir par l'extrémité 13c afin de lubrifier les dentures. L'huile est également amenée vers le bras 13b et circule via la bouche d'alimentation 13d du palier. L'huile circule ensuite à travers l'axe dans une ou des zones tampons 10c pour ensuite ressortir par les orifices 10d afin de lubrifier les paliers des satellites.

Dans la technique antérieure représentée à la figure 2, un solaire 7 de réducteur comprend un corps annulaire s'étendant autour de l'axe X et comprenant à sa périphérie interne les cannelures 7a d'accouplement avec l'arbre 3, et à sa périphérie externe une denture 7b d'engrènement avec la denture 8d de chaque satellite 8. Les cannelures 7a sont situées dans un alésage central A traversant du corps qui est centré sur l'axe X.

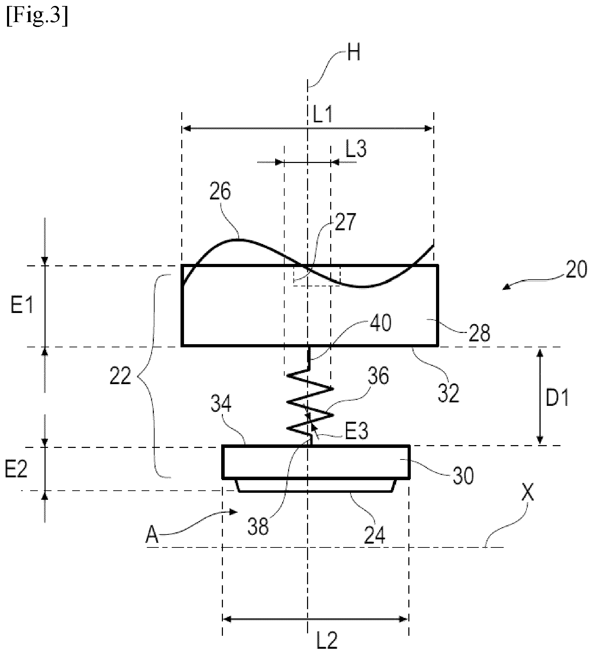

La figure 3 illustre de manière schématique le principe général de l'invention. Le solaire 20 selon l'invention comprend un corps annulaire 22 s'étendant autour de l'axe X et comprenant à sa périphérie interne les cannelures 24 d'accouplement avec l'arbre 3, et à sa périphérie externe une denture 26 d'engrènement avec la denture 8d de chaque satellite 8.

Le corps 22 a la particularité de comprendre deux anneaux, respectivement externe 28 et interne 30, qui sont coaxiaux et s'étendent l'un autour de l'autre.

L'anneau externe 28 comporte à sa périphérie externe la denture 26 précitée. Cette denture 26 peut comprendre deux séries de dents adjacentes séparées axialement l'un de l'autre par une rainure annulaire 27 débouchant radialement vers l'extérieur. Ces deux séries de dents ont le même diamètre et peuvent être en chevron.

L'anneau externe 28 comporte à sa périphérie interne une surface interne 32, par exemple cylindrique.

L'anneau externe 28 a une longueur ou dimension axiale L1 et une épaisseur radiale maximale E1. Cette épaisseur E1 est mesurée au niveau de la denture 26 et non pas de la rainure 27.

L'anneau interne 30 comporte à sa périphérie interne les cannelures 24 précitées. Ces cannelures 24 sont par exemple droites ou rectilignes et parallèles à l'axe X.

L'anneau interne 30 comporte à sa périphérie externe une surface externe 34, par exemple cylindrique.

L'anneau interne 30 a une longueur ou dimension axiale L2 et une épaisseur radiale E2. Cette épaisseur E2 est mesurée au niveau des cannelures 24. Les anneaux 28, 30 sont séparées l'un de l'autre par une distance radiale D1 qui correspond à la distance radiale mesurée entre les surfaces 32, 34.

Avantageusement, L2 est inférieure ou égale à L1.

Avantageusement, E2 est inférieur ou égale à E1.

Le corps 22 comprend en outre un voile annulaire 36 de liaison qui est situé entre les anneaux 28, 30 et plus particulièrement entre les surfaces 32, 34. Le voile 36 est de préférence formé d'une seule pièce avec les anneaux 28, 30.

Le corps 22 ou le solaire 20 peut être formé d'une seule pièce. En variante, la denture 26 du solaire est formée sur un élément qui est rapporté sur l'anneau externe 28, et fixé à cet anneau 28 par exemple par frettage ou serrage au moyen d'un écrou vissé. Les cannelures 24 pourraient également être formées sur un autre élément qui serait rapporté dans l'anneau interne 30, et fixé à cet anneau 30 par exemple par frettage ou serrage au moyen d'un écrou vissé.

Le voile 36 comporte un bord périphérique interne 38 relié à la surface externe 34 de l'anneau interne 30 et un bord périphérique externe 40 relié à la surface interne 32 de l'anneau externe 28.

La particularité de ces bords 38, 40 est qu'ils sont situés dans un même plan H perpendiculaire à l'axe X et passant par les milieux des anneaux 28, 30. C'est dans ce plan H qu'a lieu la transmission des efforts en fonctionnement entre les anneaux 28, 30 et donc dans le corps 22. La transmission des efforts est donc centrée au milieu du solaire 20, ce qui a pour avantage de mieux répartir les charges au niveau de la denture 26.

Le figure 3 montre que le voile 36 comprend, entre ses bords 38, 40, une série de parois 42 de liaison, cylindriques et/ou tronconiques. Au moins une de ces parois de liaison 42 s'étend en dehors du plan H. Avantageusement, le voile 36 a une forme générale de soufflet ou une forme générale ondulée en direction radiale. La forme de soufflet ou ondulée est une forme préférée du voile 36, qui n'est pas limitative. Il suffit en effet d'avoir une paroi de liaison en dehors du plan H pour conférer au solaire la souplesse recherchée.

Les parois 42 du voile 36 peuvent s'étendre au moins en partie les unes autour des autres. Le voile 36 peut avoir en section axiale une forme générale en S, U, C, V, M, W ou Ω ou comprendre une ou plusieurs parties ayant en section axiale une forme générale en S, U, C, V, M, W ou Ω.

Le voile 36 a une dimension radiale correspondant à la distance radiale D1. Par ailleurs, le voile 36 a une longueur ou dimension axiale L3 et une épaisseur (de matière) E3. E3 est déterminée pour autoriser le passage du couple.

Avantageusement, L3 est inférieur ou égale à L1 ou L2. Avantageusement, D1 ou la dimension radiale du voile 36 est supérieure ou égale à trois fois E1 ou E2.

Avantageusement, E3 est inférieure ou égale à E1 ou E2.

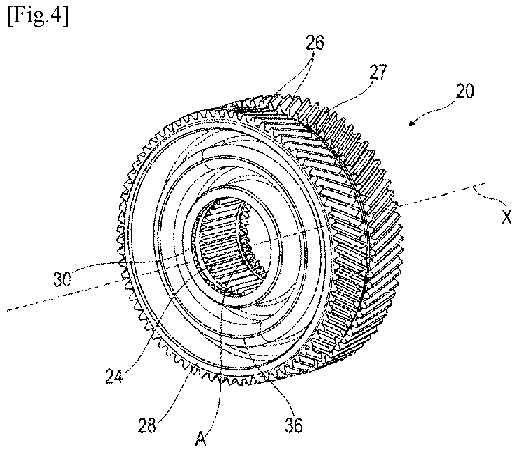

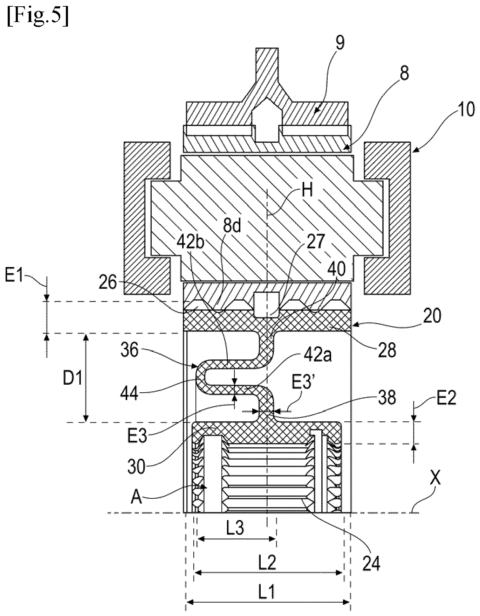

Les figures 4 et 5 illustrent un mode de réalisation plus concret d'un solaire 20 selon l'invention.

Dans ce mode de réalisation, on constate que L1 est inférieure à L2 et que E1 est inférieure à E2. On constate également que E3 est inférieure à E1 et E2, et que L3 est inférieure à L1 et L2. L'épaisseur E3' des bords 38, 40 est légèrement supérieure à l'épaisseur E3 du reste du voile 36.

On constate également que D1 est supérieure à trois fois E1, voire supérieure ou égale à quatre fois E1.

Le voile 36 comprend ici deux parois cylindriques 42, respectivement interne 42a et externe 42b. Ces parois 42a, 42b s'étendent entièrement l'une autour de l'autre. La paroi interne 42a comprend une extrémité axiale reliée à la périphérie externe du bord 38, et une extrémité axiale opposée reliée par une paroi radiale 44 à une extrémité axiale de la paroi externe 42b. L'extrémité axiale opposée de cette paroi externe 42b est reliée à la périphérie interne du bord 40.

Les parois 42a, 42b et 44 forment en section un C ou U.

Dans ce mode de réalisation, on constate que les parois 42a, 42b et 44 s'étendent d'un même côté vis-à-vis du plan H.

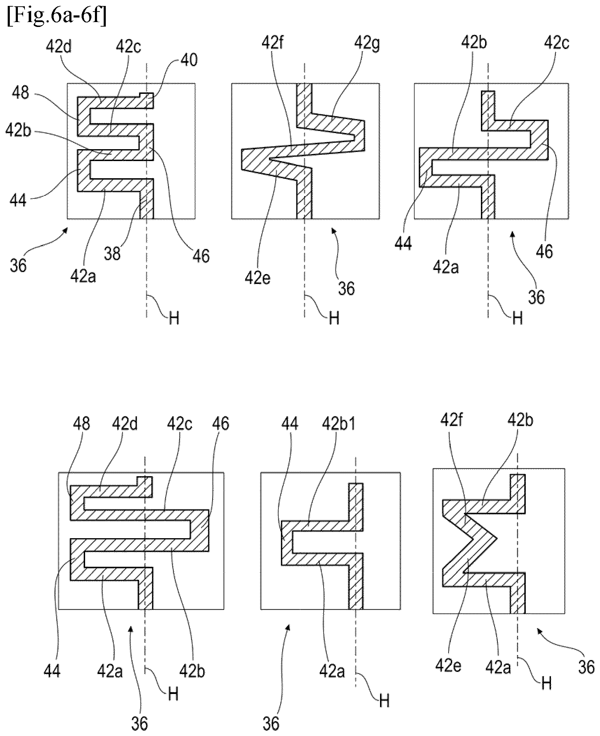

Les figures 6a à 6f illustrent des variantes de réalisation du voile 36 du solaire 20 selon l'invention.

Dans la figure 6a, le voile 20 comprend quatre parois cylindriques 42a, 42b, 42c, 42d.

Les parois 42a, 42b, 42c, 42d s'étendent entièrement l'une autour de l'autre. La paroi 42a comprend une extrémité axiale reliée à la périphérie externe du bord 38, et une extrémité axiale opposée reliée par une première paroi radiale 44 à une extrémité axiale de la paroi 42b.

La paroi 42b comprend une extrémité axiale opposée reliée par une seconde paroi radiale 46 à une extrémité axiale de la paroi 42c.

La paroi 42c comprend une extrémité axiale opposée reliée par une troisième paroi radiale 48 à une extrémité axiale de la paroi 42d.

L'extrémité axiale opposée de cette paroi 42d est reliée à la périphérie interne du bord 40.

Les parois 42a, 42b, 42c, 42d, 44, 46 et 48 forment en section des S. On constate que ces parois s'étendent d'un même côté vis-à-vis du plan H. Dans la figure 6b, le voile 20 comprend trois parois tronconiques 42e, 42f, 42g.

Les parois 42e, 42f, 42g s'étendent en partie les unes autour des autres. La paroi interne 42e comprend une extrémité axiale reliée à la périphérie externe du bord 38, et une extrémité axiale opposée reliée directement à une extrémité axiale de la paroi intermédiaire 42f.

La paroi intermédiaire 42f comprend une extrémité axiale opposée reliée directement à une extrémité axiale de la paroi externe 42g.

La paroi 42g comprend une extrémité axiale opposée reliée à la périphérie interne du bord 40.

La paroi intermédiaire 42f a une tronconicité inversée par rapport à celle des parois 42e et 42g.

Les parois 42e, 42f et 42g forment des zig zag de part et d'autre du plan H. Dans la figure 6c, le voile 20 comprend trois parois cylindriques 42a, 42b, 42c.

Les parois 42a, 42b, 42c s'étendent en partie l'une autour de l'autre. La paroi interne 42a comprend une extrémité axiale reliée à la périphérie externe du bord 38, et une extrémité axiale opposée reliée par une première paroi radiale 44 à une extrémité axiale de la paroi intermédiaire 42b.

La paroi intermédiaire 42b comprend une extrémité axiale opposée reliée par une seconde paroi radiale 46 à une extrémité axiale de la paroi externe 42c. L'extrémité axiale opposée de cette paroi externe 42c est reliée à la périphérie interne du bord 40.

Les parois du voile 36 forment en section un S retourné. Ces parois s'étendent de part et d'autre du plan H.

Le voile 36 de la figure 6d diffère du voile de la figure 6a essentiellement en ce que les parois 42b, 42c sont rallongées et s'étendent ici de part et d'autre du plan H. La paroi 46 est située d'un côté du plan H, et les parois 44, 48 sont situées du côté opposé à ce plan H.

Le voile de la figure 6e diffère de celui des figures 4 et 5 essentiellement par les jonctions des parois 42a, 42b entre elles via la paroi 44. Ces jonctions peuvent être en angle droit ou incurvées. De manière générale, dans tous les modes de réalisation, les jonctions entre les parois peuvent être en angle droit ou incurvées. Les jonctions incurvées permettent de mieux répartir les contraintes et sont donc préférées.

Dans la figure 6f, le voile 20 comprend deux parois cylindriques 42a, 42b et deux parois tronconiques 42e, 42f.

Les parois 42a, 42b, 42c, 42d s'étendent en partie les unes autour des autres. La paroi cylindrique interne 42a comprend une extrémité axiale reliée à la périphérie externe du bord 38, et une extrémité axiale opposée reliée directement à la paroi tronconique interne 42e.

La paroi 42e comprend une extrémité axiale opposée reliée directement à une extrémité axiale de la paroi tronconique externe 42f.

La paroi 42f comprend une extrémité axiale opposée reliée directement à une extrémité axiale de la paroi cylindrique externe 42b.

L'extrémité axiale opposée de cette paroi 42b est reliée à la périphérie interne du bord 40.

Les tronconicités des parois 42e, 42f sont inversées.

Les parois 42a, 42b, 42e, 42f forment en section un M ou un W. On constate que ces parois s'étendent d'un même côté vis-à-vis du plan H.

La forme particulière du voile 36 du solaire 20 selon l'invention peut être obtenue de fonderie ou par usinage.

## Revendications

1. Réducteur mécanique (6) pour une turbomachine (1) d'aéronef, ce réducteur comprenant :
- un porte-satellites (10) qui comprend un premier axe de rotation (X),
- un solaire (20) qui est monté dans le porte-satellites (10) et qui est centré sur le premier axe (X),
- une couronne (9) qui s'étend autour du solaire (20) et du premier axe (X), et
- des satellites (8) qui sont portés par le porte-satellites (10) et qui sont engrenés avec le solaire (20) et la couronne (9), les satellites (8) comportant des seconds axes de rotation (Y) parallèles au premier axe (X),
le solaire (20) comportant un corps annulaire (22) s'étendant autour de l'axe (X) et présentant un alésage central (A) traversant centré sur l'axe (X), l'alésage (A) étant pourvu de cannelures d'accouplement (24), et le corps annulaire (22) comprenant à sa périphérie externe au moins une denture d'engrènement (26), **caractérisé en ce que** le corps (22) comprend deux anneaux coaxiaux, respectivement un anneau externe (28) et un anneau interne (30), l'anneau externe (28) comportant une surface interne (32) qui entoure une surface externe (34) de l'anneau interne (30) et qui est située à distance radiale (D1) de cette surface externe (34), le corps (22) comportant en outre un voile annulaire (36) de liaison entre la surface interne (32) de l'anneau externe (34) et la surface externe (34) de l'anneau interne (30) et le voile annulaire (26) étant formé d'une seule pièce avec l'anneau interne (30) et l'anneau externe (28), ce voile annulaire (36) comportant un bord périphérique interne (38) relié à la surface externe (34) de l'anneau interne (30) et un bord périphérique externe (40) relié à la surface interne (32) de l'anneau externe (28), ces bords interne et externe (38, 40) étant situés dans un même plan (H) perpendiculaire audit axe (X) et passant axialement par les milieux desdits anneaux interne et externe (28, 30), le voile annulaire (36) comprenant en outre au moins une paroi de liaison entre ses bords interne et externe (38, 40) qui s'étend en dehors du plan (H), le voile annulaire (36) ayant de préférence une forme générale de soufflet ou une forme générale ondulée en direction radiale.

2. Réducteur mécanique (6) selon la revendication 1, dans lequel ladite au moins une paroi de liaison (42) est cylindrique et/ou tronconique.

3. Réducteur mécanique (6) selon la revendication 1 ou 2, dans lequel le voile annulaire (36) comprend entre deux et cinq parois de liaison (42).

4. Réducteur mécanique (6) selon la revendication 3, dans lequel les parois de liaison (42) sont agencées en étant mises bout à bout et s'étendent les unes autour des autres.

5. Réducteur mécanique (6) selon l'une des revendications précédentes, dans lequel le voile annulaire (36) a en section axiale une forme générale en S, U, C, V, M, Wou Ω, ou comprend une ou plusieurs parties ayant en section axiale une forme générale en S, U, C, V, M, W ou Ω.

6. Réducteur mécanique (6) selon l'une des revendications précédentes, dans lequel l'anneau interne (30) a une longueur axiale (L2) inférieure ou égale à celle (L1) de l'anneau externe (28).

7. Réducteur mécanique (6) selon l'une des revendications précédentes, dans lequel le voile annulaire (36) a une longueur axiale (L3) inférieure ou égale à celle (L1, L2) de l'anneau interne (30) ou de l'anneau externe (28).

8. Réducteur mécanique (6) selon l'une des revendications précédentes, dans lequel l'anneau interne (30) a une épaisseur radiale maximale (E2) inférieure ou égale à celle (E1) de l'anneau externe (28).

9. Réducteur mécanique (6) selon l'une des revendications précédentes, dans lequel la distance radiale (D1) entre les anneaux interne et externe (28, 30), ou la dimension radiale du voile annulaire (36), est supérieure ou égale à trois fois l'épaisseur radiale (E1, E2) de l'anneau interne (30) ou externe (28).

10. Réducteur mécanique (6) selon l'une des revendications précédentes, dans lequel le voile annulaire (36) a une épaisseur (E3) inférieure ou égale à celle (E1, E2) de l'anneau interne (30) ou de l'anneau externe (28).

11. Réducteur mécanique (6) selon l'une des revendications précédentes, laquelle le solaire (20) est réalisé en une seule pièce.

12. Turbomachine (1) d'aéronef, comportant un réducteur mécanique (6) selon l'une des revendications 1 à 11.

## Patentansprüche

1. Mechanisches Untersetzungsgetriebe (6) für ein Turbotriebwerk (1) eines Luftfahrzeugs, wobei dieses Untersetzungsgetriebe umfasst:
- einen Planetenträger (10), der eine erste Drehachse (X) umfasst,
- ein Sonnenrad (20), das im Planetenträger (10) angebracht ist und das auf der ersten Achse (X) zentriert ist,
- eine Krone (9), die sich um das Sonnenrad (20) und um die erste Achse (X) erstreckt, und
- Planeten (8), die von dem Planetenträger (10) getragen werden und die mit dem Sonnenrad (20) und der Krone (9) in Eingriff stehen, wobei die Planeten (8) zweite Drehachsen (Y) parallel zur ersten Achse (X) umfassen,
wobei das Sonnenrad (20) einen ringförmigen Körper (22) umfasst, der sich um die Achse (X) erstreckt und eine mittlere Durchgangsbohrung (A) aufweist, die auf der Achse (X) zentriert ist, wobei die Bohrung (A) mit Kopplungsnuten (24) versehen ist, und wobei der ringförmige Körper (22) an seinem Außenumfang mindestens eine Eingriffsverzahnung (26) umfasst, **dadurch gekennzeichnet, dass** der Körper (22) zwei koaxiale Ringe, einen Außenring (28) bzw. einen Innenring (30), umfasst, wobei der Außenring (28) eine Innenfläche (32) umfasst, die eine Außenfläche (34) des Innenrings (30) umgibt und die sich in einem radialen Abstand (D1) von dieser Außenfläche (34) befindet, wobei der Körper (22) weiter eine ringförmige Schale (36) zur Verbindung zwischen der Innenfläche (32) des Außenrings (34) und der Außenfläche (34) des Innenrings (30) umfasst, und wobei die ringförmige Schale (26) einstückig mit dem Innenring (30) und dem Außenring (28) gebildet ist, wobei diese ringförmige Schale (36) eine innere Umfangskante (38), die mit der Außenfläche (34) des Innenrings (30) verbunden ist, und eine äußere Umfangskante (40), die mit der Innenfläche (32) des Außenrings (28) verbunden ist, umfasst, wobei sich diese innere und äußere Kante (38, 40) in einer selben Ebene (H) befinden, die senkrecht zur Achse (X) ist und axial durch die Mittelpunkte des Innen- und Außenrings (28, 30) verläuft, wobei die ringförmige Schale (36) weiter mindestens eine Verbindungswand zwischen ihrer Innen- und Außenkante (38, 40) umfasst, die sich außerhalb der Ebene (H) erstreckt, wobei die ringförmige Schale (36) vorzugsweise eine allgemeine Balgform oder eine allgemeine in radialer Richtung gewellte Form aufweist.

2. Mechanisches Untersetzungsgetriebe (6) nach Anspruch 1, wobei die mindestens eine Verbindungswand (42) zylindrisch und/oder kegelförmig ist.

3. Mechanisches Untersetzungsgetriebe (6) nach Anspruch 1 oder 2, wobei die ringförmige Schale (36) zwischen zwei und fünf Verbindungswände (42) umfasst.

4. Mechanisches Untersetzungsgetriebe (6) nach Anspruch 3, wobei die Verbindungswände (42) aneinandergereiht angeordnet sind und sich umeinander herum erstrecken.

5. Mechanisches Untersetzungsgetriebe (6) nach einem der vorstehenden Ansprüche, wobei die ringförmige Schale (36) im axialen Schnitt eine allgemeine S-, U-, C-, V-, M-, W- oder Ω-Form aufweist oder einen oder mehrere Teile umfasst, die im axialen Schnitt eine allgemeine S-, U-, C-, V-, M-, W- oder Ω-Form aufweisen.

6. Mechanisches Untersetzungsgetriebe (6) nach einem der vorstehenden Ansprüche, wobei der Innenring (30) eine axiale Länge (L2) aufweist, die kleiner oder gleich jener (L1) des Außenrings (28) ist.

7. Mechanisches Untersetzungsgetriebe (6) nach einem der vorstehenden Ansprüche, wobei die ringförmige Schale (36) eine axiale Länge (L3) aufweist, die kleiner oder gleich jener (L1, L2) des Innenrings (30) oder des Außenrings (28) ist.

8. Mechanisches Untersetzungsgetriebe (6) nach einem der vorstehenden Ansprüche, wobei der Innenring (30) eine maximale radiale Stärke (E2) aufweist, die kleiner oder gleich jener (E1) des Außenrings (28) ist.

9. Mechanisches Untersetzungsgetriebe (6) nach einem der vorstehenden Ansprüche, wobei der radiale Abstand (D1) zwischen dem Innen- und dem Außenring (28, 30) oder die radiale Dimension der ringförmigen Schale (36) größer oder gleich dem Dreifachen der radialen Stärke (E1, E2) des Innen- (30) oder Außenrings (28) ist.

10. Mechanisches Untersetzungsgetriebe (6) nach einem der vorstehenden Ansprüche, wobei die ringförmige Schale (36) eine Stärke (E3) aufweist, die kleiner oder gleich jener (E1, E2) des Innenrings (30) oder des Außenrings (28) ist.

11. Mechanisches Untersetzungsgetriebe (6) nach einem der vorstehenden Ansprüche, wobei das Sonnenrad (20) einstückig ist.

12. Turbotriebwerk (1) eines Luftfahrzeugs, das ein mechanisches Untersetzungsgetriebe (6) nach einem der Ansprüche 1 bis 11 umfasst.

## Claims

1. A mechanical reduction gear (6) for an aircraft turbomachine (1), this reduction gear comprising:
- a planet carrier (10) comprising a first axis of rotation (X),
- a sun gear (20) mounted in the planet carrier (10) and centered on the first axis (X),
- a ring gear (9) extending around the sun gear (20) and the first axis (X), and
- planet gears (8) carried by the planet carrier (10) and meshing with the sun gear (20) and the ring gear (9), the planet gears (8) comprising second axes of rotation (Y) parallel to the first axis (X),
the sun gear (20) comprising an annular body (22) extending about the axis (X) and having a central through bore (A) centered on the axis (X), the bore (A) being provided with coupling splines (24), and the annular body (22) comprising at its outer periphery at least one meshing toothing (26), **characterised in that** the body (22) comprises two coaxial rings, respectively an outer ring (28) and an inner ring (30), the outer ring (28) comprising an inner surface (32) which surrounds an outer surface (34) of the inner ring (30) and which is situated at a radial distance (D1) from this outer surface (34), the body (22) further comprising an annular web (36) for connection between the inner surface (32) of the outer ring (34) and the outer surface (34) of the inner ring (30) and the annular web (26) being formed in a single part with the inner ring (30) and the outer ring (28), this annular web (36) comprising an inner peripheral edge (38) connected to the outer surface (34) of the inner ring (30) and an outer peripheral edge (40) connected to the inner surface (32) of the outer ring (28), these inner and outer edges (38, 40) being situated in the same plane (H) perpendicular to said axis (X) and passing axially through the middles of said inner and outer rings (28, 30), the annular web (36) further comprising at least one connecting wall between its inner and outer edges (38, 40) which extend outside the plane (H), the annular web (36) preferably having a general bellows shape or a generally corrugated shape in the radial direction.

2. The mechanical reduction gear (6) according to claim 1, wherein said at least one connecting wall (42) is cylindrical and/or frustoconical.

3. The mechanical reduction gear (6) according to claim 1 or 2, wherein the annular web (36) comprises between two and five connecting walls (42).

4. The mechanical reduction gear (6) according to claim 3, wherein the connecting walls (42) are arranged end-to-end and extend around each other.

5. The mechanical reduction gear (6) according to one of the preceding claims, wherein the annular web (36) has in axial section a general shape in the form of S, U, C, V, M, W or Ω, or comprises one or more portions having in axial section a general shape in the form of S, U, C, V, M, W or Ω.

6. The mechanical reduction gear (6) according to one of the preceding claims, wherein the inner ring (30) has an axial length (L2) less than or equal to that (L1) of the outer ring (28).

7. The mechanical reduction gear (6) according to one of the preceding claims, wherein the annular web (36) has an axial length (L3) less than or equal to that (L1, L2) of the inner ring (30) or the outer ring (28).

8. The mechanical reduction gear (6) according to one of the preceding claims, wherein the inner ring (30) has a maximum radial thickness (E2) less than or equal to that (E1) of the outer ring (28).

9. The mechanical reduction gear (6) according to one of the preceding claims, wherein the radial distance (D1) between the inner and outer rings (28, 30), or the radial dimension of the annular web (36), is greater than or equal to three times the radial thickness (E1, E2) of the inner (30) or outer (28) ring.

10. The mechanical reduction gear (6) according to one of the preceding claims, wherein the annular web (36) has a thickness (E3) less than or equal to that (E1, E2) of the inner ring (30) or the outer ring (28).

11. The mechanical reduction gear (6) according to one of the preceding claims, wherein the sun gear (20) is made in a single part.

12. An aircraft turbomachine (1) comprising a mechanical reduction gear (6) according to one of claims 1 to 11.
